# EUROPEAN PATENT SPECIFICATION

(11) **EP 3 926 652 B1**
(45) Date of publication and mention of the grant of the patent: **24.09.2025**
(21) Application number: 20782553.0
(22) Date of filing: 18.03.2020
(51) Int. Cl.: H01G 11/60, H01G 11/62, H01M 10/0568, H01M 10/0569, H01G 11/06, H01G 11/84, H01M 10/052

(54) **NON-AQUEOUS ELECTROLYTE FOR POWER STORAGE ELEMENT, NON-AQUEOUS ELECTROLYTE POWER STORAGE ELEMENT, AND METHOD FOR PRODUCING NON-AQUEOUS ELECTROLYTE POWER STORAGE ELEMENT**
WASSERFREIER ELEKTROLYT FÜR ENERGIESPEICHERELEMENT, STROMSPEICHERELEMENT MIT WASSERFREIEM ELEKTROLYT UND VERFAHREN ZUR HERSTELLUNG EINES STROMSPEICHERELEMENTS MIT WASSERFREIEM ELEKTROLYT
ÉLECTROLYTE NON AQUEUX POUR ÉLÉMENT DE STOCKAGE D'ÉNERGIE, ÉLÉMENT DE STOCKAGE D'ÉNERGIE À ÉLECTROLYTE NON AQUEUX, ET PROCÉDÉ DE PRODUCTION D'ÉLÉMENT DE STOCKAGE D'ÉNERGIE À ÉLECTROLYTE NON AQUEUX

(30) Priority: 29.03.2019 JP 2019068344
(43) Date of publication of application: 22.12.2021
(73) Proprietor: GS Yuasa International Ltd., Kisshoin, Minami-ku, Kyoto-shi, Kyoto 601-8520 (JP)
(72) Inventor: KIKUCHI, Akifumi, Kyoto-shi, Kyoto 601-8520 (JP)
(74) Representative: Isarpatent
(86) International application number: PCT/JP2020/011934
(87) International publication number: WO 2020/203289

(56) References cited:
- EP-A1- 2 869 389
- WO-A1-2017/216822
- WO-A1-2018/151234
- WO-A1-2018/190304
- WO-A1-2018/221346
- JP-A- 2016 184 462
- JP-A- 2017 050 064
- JP-A- 2017 120 765
- JP-A- 2017 162 793
- JP-A- 2017 162 793
- US-A1- 2016 013 517

## Description

### TECHNICAL FIELD

The present invention relates to a nonaqueous electrolyte for an energy storage device, a nonaqueous electrolyte energy storage device, and a method of producing a nonaqueous electrolyte energy storage device

### BACKGROUND ART

Nonaqueous electrolyte secondary batteries typified by lithium ion secondary batteries are widely used for electronic devices such as personal computers and communication terminals, automobiles and the like because these secondary batteries have a high energy density. The nonaqueous electrolyte secondary battery generally has a pair of electrodes, electrically separated from each other with a separator, and a nonaqueous electrolyte interposed between the electrodes, and the secondary battery is configured to allow ions to be transferred between both the electrodes for charge-discharge. Capacitors such as a lithium ion capacitor and an electric double layer capacitor are also widely used as nonaqueous electrolyte energy storage devices other than the nonaqueous electrolyte secondary battery.

In general, the nonaqueous electrolyte contains a nonaqueous solvent and an electrolyte salt dissolved in the nonaqueous solvent, and other components are added as necessary. As the electrolyte salt, lithium hexafluorophosphate (LiPF₆) is widely used. However, it is known that LiPF₆ easily reacts with a trace amount of water contained in the nonaqueous electrolyte energy storage device, and as a result, charge-discharge performance of the nonaqueous electrolyte energy storage device is deteriorated by hydrogen fluoride (HF) generated. On the other hand, imide salts such as LiN(SO₂F)₂(LiFSI), LiN(C₂F₅SO₂)₂(LiBETI), and LiN(CF₃SO₂)₂(LiTFSI) are also known as one type of electrolyte salt used for the nonaqueous electrolyte. The imide salt is less reactive with water than LiPF₆, and hardly generates HF. Thus, when an imide salt such as LiFSI is used as at least a portion of the electrolyte salt of the nonaqueous electrolyte, a nonaqueous electrolyte energy storage device to which the imide salt is applied is expected to obtain good charge-discharge performance (see Patent Documents 1 and 2). As one type of charge-discharge cycle performance improving additive used for a nonaqueous electrolyte using LiPF₆ as the electrolyte salt, a salt in which a charge center element of an anion such as lithium bis(oxalate)borate (LiBOB) is boron (see Patent Document 3) and a difluorophosphate such as lithium difluorophosphate (LiPO₂F₂) (see Patent Document 4) are known. JP 2017 162793 A discloses a nonaqueous electrolyte for an energy storage device comprising an imide salt (LiFSI) and a salt in which a charge center element of an anion is boron and which has an oxalato group (LiBOB).

### PRIOR ART DOCUMENTS

### PATENT DOCUMENTS

Patent Document 1: JP-B-3-878206
Patent Document 2: JP-B-5-245373
Patent Document 3: JP-A-2010-050079
Patent Document 4: JP-A-2004-031079

### SUMMARY OF THE INVENTION

### PROBLEMS TO BE SOLVED BY THE INVENTION

However, in the nonaqueous electrolyte energy storage device, it is known that when an imide salt such as LiFSI, LiBETI, or LiTFSI is used as an electrolyte salt at a general concentration of about 1 mol dm⁻³, oxidation/corrosion of aluminum used as a positive substrate or the like of the nonaqueous electrolyte energy storage device is likely to occur when the positive electrode is operated so as to develop an operation potential of 4.0 V (vs. Li/Li⁺) or more. Thus, even when an imide salt is used as the electrolyte salt of the nonaqueous electrolyte at a general concentration in place of LiPF₆, an effect of improving the charge-discharge cycle performance is not sufficiently obtained. According to findings of the present inventor, when the present inventor has prepared a nonaqueous electrolyte using an imide salt as an electrolyte salt at a general concentration, or a nonaqueous electrolyte using an imide salt as at least a portion of an electrolyte salt, and either a salt in which a charge center element of an anion such as LiBOB is boron or a difluorophosphate such as LiPO₂F₂ as a charge-discharge cycle performance improving additive, and has confirmed the charge-discharge cycle performance of a lithium ion secondary battery, which is a nonaqueous electrolyte energy storage device to which the nonaqueous electrolyte was applied, it has been found that a sufficient effect of improving the charge-discharge cycle performance is not obtained.

The present invention has been made in view of the above circumstances, and an object of the present invention is to provide a nonaqueous electrolyte for an energy storage device which contains an imide salt as at least a portion of an electrolyte salt and can improve charge-discharge cycle performance when a positive electrode of a nonaqueous electrolyte energy storage device is operated so as to develop an operation potential of 4.0 V (vs. Li/Li⁺) or more, a nonaqueous electrolyte energy storage device including the nonaqueous electrolyte for an energy storage device, and a method of producing such a nonaqueous electrolyte energy storage device.

### MEANS FOR SOLVING THE PROBLEMS

One aspect of the present invention made to solve the above problems is a nonaqueous electrolyte for an energy storage device including an imide salt (a), a salt (b) in which a charge center element of an anion is boron and which has an oxalato group, and a difluorophosphate (c), in which a content of the imide salt (a) is 3 or more in terms of molar ratio with respect to a total content of the salt (b) in which the charge center element of the anion is boron and which has the oxalato group and the difluorophosphate (c).

Another embodiment of the present invention is a nonaqueous electrolyte for an energy storage device including an imide salt (a), a salt (b) in which a charge center element of an anion is boron and which has an oxalato group, and a difluorophosphate (c), in which a content of the imide salt (a) is 25 mol% or more with respect to a total content of all ionic compounds.

Another aspect of the present invention is a nonaqueous electrolyte energy storage device including the nonaqueous electrolyte for an energy storage device according to any one of the above-mentioned aspects.

Another aspect of the present invention is a method of producing a nonaqueous electrolyte energy storage device using the nonaqueous electrolyte for an energy storage device according to any one of the above-mentioned aspects.

### ADVANTAGES OF THE INVENTION

According to the present invention, it is possible to provide a nonaqueous electrolyte for an energy storage device capable of improving charge-discharge cycle performance of a nonaqueous electrolyte energy storage device, a nonaqueous electrolyte energy storage device including the nonaqueous electrolyte, and a method of producing such a nonaqueous electrolyte energy storage device.

### BRIEF DESCRIPTION OF THE DRAWINGS

Fig. 1 is an external perspective view showing a nonaqueous electrolyte energy storage device according to an embodiment of the present invention.
Fig. 2 is a schematic diagram showing an energy storage apparatus including a plurality of the nonaqueous electrolyte energy storage devices according to an embodiment of the present invention.

### MODE FOR CARRYING OUT THE INVENTION

The nonaqueous electrolyte for an energy storage device according to an embodiment of the present invention contains an imide salt (a), a salt (b) in which a charge center element of an anion is boron and which has an oxalato group, and a difluorophosphate (c)

According to the nonaqueous electrolyte for an energy storage device, even when the imide salt in the nonaqueous electrolyte is used at a general concentration of about 1 mol ·dm⁻³, oxidation/corrosion of aluminum as a positive substrate or the like can be suppressed, and charge-discharge cycle performance of the nonaqueous electrolyte energy storage device can be improved. Although the reason why the above effect is produced in the nonaqueous electrolyte energy storage device is not clear, the following reason is presumed. One of the causes of a decrease in charge-discharge performance of the nonaqueous electrolyte energy storage device using LiPF₆ as the electrolyte salt is that a positive electrode surface is corroded by a trace amount of HF present near the positive electrode. Due to this corrosion, a positive active material component is eluted from the surface of the positive electrode and diffused toward the negative electrode, and the positive active material component is precipitated on the negative electrode. As a result, it is considered that the irreversible capacity and resistance of the negative electrode gradually increase, and the charge-discharge performance deteriorates. It is presumed that the trace amount of HF is generated by decomposition or the like of LiPF₆ near the positive electrode. On the other hand, the imide salt has a strong interaction between a cation and an anion, and as a result, due to oxidation resistance of the anion expressed, the nonaqueous electrolyte for an energy storage device containing the imide salt hardly generates HF due to decomposition or the like near the positive electrode; therefore, it is presumed that corrosion of the positive electrode surface hardly occurs. As a result, it is presumed that the increase in the irreversible capacity and resistance of the negative electrode is suppressed, and the charge-discharge cycle performance of the nonaqueous electrolyte energy storage device can be improved. According to the nonaqueous electrolyte energy storage device, it is presumed that when the salt in which the charge center element of the anion is boron and which has an oxalato group, and the difluorophosphate are contained, in addition to suppression of the corrosion of the positive electrode surface, it is possible to suppress the oxidation/corrosion of aluminum as the positive substrate or the like even when the imide salt is used at a general concentration of about 1 mol ·dm⁻³. As a result, the effect of these salts as a charge-discharge cycle performance improving additive is sufficiently exerted, and the charge-discharge cycle performance of the nonaqueous electrolyte energy storage device can be improved.

According to the nonaqueous electrolyte for an energy storage device, since the content of the imide salt (a) is 3 or more in terms of molar ratio with respect to the total content of the salt (b) in which the charge center element of the anion is boron and which has an oxalato group, and the difluorophosphate (c), the effect of improving the charge-discharge cycle performance of the nonaqueous electrolyte device using the nonaqueous electrolyte for an energy storage device can be sufficiently obtained.

Alternatively, according to the nonaqueous electrolyte for an energy storage device, since the content of the imide salt (a) is 25 mol% or more with respect to the total content of all ionic compounds in the nonaqueous electrolyte, the effect of improving the charge-discharge cycle performance of the nonaqueous electrolyte device using the nonaqueous electrolyte for an energy storage device can be sufficiently obtained.

The nonaqueous electrolyte for an energy storage device preferably further contains a chain nonaqueous solvent containing fluorine in the molecule.

In the nonaqueous electrolyte for an energy storage device, by further containing a chain nonaqueous solvent containing fluorine in the molecule, which has high oxidation resistance and a relatively low viscosity, it is possible not only to suppress side reactions (oxidation and decomposition of the nonaqueous solvent and the like) that may occur at the time of charging and discharging of the nonaqueous electrolyte energy storage device, but also to suppress an increase in the viscosity of the nonaqueous electrolyte and a reduction in the ionic conductivity. Thus, by containing the chain nonaqueous solvent containing fluorine in the molecule, the charge-discharge cycle performance can be further improved particularly when the nonaqueous electrolyte energy storage device using the nonaqueous electrolyte for an energy storage device is operated at a high voltage.

A nonaqueous electrolyte energy storage device according to an embodiment of the present invention is a nonaqueous electrolyte energy storage device including any of the nonaqueous electrolytes for an energy storage device described above.

According to the nonaqueous electrolyte energy storage device, by including any one of the nonaqueous electrolytes for an energy storage device described above, the charge-discharge cycle performance can be further improved even when the imide salt is contained as at least a portion of the electrolyte salt.

A method of producing a nonaqueous electrolyte energy storage device according to an embodiment of the present invention is a method of producing a nonaqueous electrolyte energy storage device using any of the nonaqueous electrolytes for an energy storage device described above.

According to the production method, by using any one of the nonaqueous electrolytes for an energy storage device described above, a nonaqueous electrolyte energy storage device having further improved charge-discharge cycle performance can be produced even when the imide salt is contained as at least a portion of the electrolyte salt.

Hereinafter, the nonaqueous electrolyte for an energy storage device, the nonaqueous electrolyte energy storage device, and the method of producing a nonaqueous electrolyte energy storage device according to an embodiment of the present invention will be described in detail.

### <Nonaqueous electrolyte for energy storage device>

The nonaqueous electrolyte for an energy storage device (hereinafter, also simply referred to as the "nonaqueous electrolyte") according to an embodiment of the present invention contains the imide salt (a), the salt (b) in which the charge center element of the anion is boron and which has an oxalato group, and the difluorophosphate (c) The nonaqueous electrolyte is not limited to a liquid electrolyte. That is, the nonaqueous electrolyte includes not only a liquid electrolyte obtained by dissolving these salts in a nonaqueous solvent but also a solid electrolyte or a gel electrolyte.

### (Imide salt)

Examples of the imide salt include a lithium imide salt, a sodium imide salt, and a potassium imide salt. Among them, the lithium imide salt is preferable.

Examples of the lithium imide salt include LiN(SO₂F)₂ (lithium bis(fluorosulfonyl)imide: LiFSI), LiN(CF₃SO₂)₂ (lithium bis(trifluoromethanesulfonyl)imide: LiTFSI), LiN(C₂F₅SO₂)₂ (lithium bis(pentafluoroethanesulfonyl)imide: LiBETI), LiN(C₄F₉SO₂)₂ (lithium bis(nonafluorobutanesulfonyl)imide), lithium sulfonylimide salts such as FSO₂-N-SO₂-C₄F₉Li, CF₃-SO₂-N-SO₂-C₄F₉Li, CF₃-SO₂-N-SO₂-N-SO₂CF₃Li₂, CF₃-SO₂-N-SO₂-CF₂-SO₂-N-SO₂-CF₃Li₂, CF₃-SO₂-N-SO₂-CF₂-SO₃Li₂, and CF₃-SO₂-N-SO₂-CF₂-SO₂-C(-SO₂CF₃)₂Li₂; and lithium phosphonylimide salts such as LiN(POF₂)₂ (lithium bis(difluorophosphonyl)imide: LiDFPI). One or two or more of the lithium imide salts can be used.

The lithium imide salt preferably has a fluorine atom, and specifically preferably has, for example, a fluorosulfonyl group, a difluorophosphonyl group, a fluoroalkyl group, and the like. Among the lithium imide salts, lithium sulfonylimide salts are preferable, LiFSI, LiTFSI, and LiBETI are more preferable, and LiFSI is still more preferable. These imide salts are imide salts that are relatively likely to cause oxidation/corrosion of aluminum during charging and discharging when the operation potential of the positive electrode is 4.0 V (vs. Li/Li⁺) or more. Therefore, when such an imide salt is used, it is possible to particularly effectively obtain the advantage of the present invention that the oxidation/corrosion of aluminum in the charging and discharging when the operation potential of the positive electrode is 4.0 V (vs. Li/Li⁺) or more can be suppressed to improve the charge-discharge cycle performance of the nonaqueous electrolyte energy storage device.

### (Salt in which charge center element of anion is boron and which has oxalato group)

Examples of the salt in which the charge center element of the anion is boron and which has an oxalato group include lithium salts, sodium salts, and potassium salts. Among them, a lithium salt in which the charge center element of the anion is boron and which has an oxalato group is preferable.

Examples of the lithium salt in which the charge center element of the anion is boron and which has an oxalato group include lithium bisoxalate borate (LiBOB) and lithium difluoro oxalate borate (LiDFOB). The lithium salt in which the charge center element of the anion is boron and which has an oxalato group is preferably a salt further having a fluorine atom, and specifically, LiDFOB is preferable. One or two or more of the lithium salts in which the charge center element of the anion is boron and which has an oxalato group can be used.

### (Difluorophosphate)

Examples of the difluorophosphate include lithium difluorophosphate, sodium difluorophosphate, and potassium difluorophosphate. Among them, lithium difluorophosphate is preferable.

Examples of the lithium difluorophosphate include lithium difluorophosphate (LiPO₂F₂) and lithium difluorobisoxalate phosphate (LiDFOP). Among them, LiPO₂F₂ is preferable. One or two or more of the lithium difluorophosphates can be used.

### (Other ionic compounds)

The nonaqueous electrolyte may or may not further contain another ionic compound in addition to the imide salt (a), the salt (b) in which the charge center element of the anion is boron and which has an oxalato group, and the difluorophosphate (c). Examples of the another ionic compound include a lithium salt, a sodium salt, a potassium salt, a magnesium salt, and an onium salt other than the imide salt (a), the salt (b) in which the charge center element of the anion is boron and which has an oxalato group, and the difluorophosphate (c). Among them, the lithium salt is preferable.

Examples of the lithium salt include inorganic lithium salts such as LiPF₆, LiBF₄, LiClO₄, and LiAsF₆, and lithium salts having a halogenated hydrocarbon group such as LiSO₃CF₃, LiSOsC₄F₉, LiC(SO₂CF₃)₃, LiC(SO₂C₂F₅)₃, and LiC(SO₂C₄F₉)₃. Among them, LiPF₆ and LiBF₄ are preferable, and LiPF₆ is more preferable from the viewpoint of the ionic conductivity. In addition, from the viewpoint of stability to water, LiBF₄ may be more preferable. One or two or more of the other ionic compounds can be used.

When another ionic compound is contained, the upper limit of the content of the ionic compound in the nonaqueous electrolyte may be preferably 1 mol ·dm⁻³, more preferably 0.1 mol ·dm⁻³, and still more preferably 0.01 mol ·dm⁻³. When the content of another ionic compound is the above upper limit or less, good charge-discharge cycle performance of the nonaqueous electrolyte energy storage device can be obtained.

The content of the imide salt (a) according to an embodiment of the present invention is 3 or more in terms of molar ratio with respect to the total content of the salt (b) in which the charge center element of the anion is boron and which has an oxalato group, and the difluorophosphate (c). In other words, when a molar amount of the imide salt (a) contained in a nonaqueous electrolyte having a predetermined mass or volume is A (mol), a molar amount of the salt (b) in which the charge center element of the anion contained in the nonaqueous electrolyte is boron and which has an oxalato group is B (mol), and a molar amount of the difluorophosphate (c) is C (mol), A/(B + C) is 3 or more. The lower limit of the molar ratio of the content of the imide salt (a) is preferably 3.5, and more preferably 5. When the molar ratio of the content of the imide salt is the above lower limit or more, the charge-discharge cycle performance of the nonaqueous electrolyte element can be improved. On the other hand, the upper limit of the molar ratio of the content is preferably 50, more preferably 25, still more preferably 20, and even more preferably 10. When the molar ratio of the content of the imide salt (a) is the above upper limit or less, it is expected that good discharge performance and high rate discharge performance in a low temperature environment of the nonaqueous electrolyte energy storage device can be obtained.

The content of the imide salt (a) according to another embodiment of the present invention is 25 mol% or more with respect to the total content of all ionic compounds in the nonaqueous electrolyte. The lower limit of the content of the imide salt (a) is more preferably 27 mol%, and still more preferably 30 mol%. When the content of the imide salt (a) is the above lower limit or more, the charge-discharge cycle performance of the nonaqueous electrolyte element can be enhanced. On the other hand, the upper limit of the content is preferably 99 mol%, more preferably 95 mol%, still more preferably 93 mol%, and even more preferably 92 mol%. When the content of the imide salt (a) is the above upper limit or less, it is expected that good discharge performance and high rate discharge performance in a low temperature environment of the nonaqueous electrolyte energy storage device can be obtained.

As the content of the imide salt (a) in the nonaqueous electrolyte, the lower limit of the content of the imide salt (a) in the nonaqueous electrolyte is, for example, preferably 0.1 mol ·dm⁻³, more preferably 0.3 mol ·dm⁻³, still more preferably 0.5 mol ·dm⁻³, and even more preferably 0.7 mol ·dm⁻³. When the content of the imide salt (a) is the above lower limit or more, the charge-discharge cycle performance of the nonaqueous electrolyte energy storage device can be enhanced. On the other hand, the upper limit of the content is preferably 2 mol ·dm⁻³, more preferably 1.4 mol ·dm³, still more preferably 1.2 mol ·dm⁻³, and even more preferably 1.1 mol ·dm⁻³. When the content of the imide salt (a) is the above upper limit or less, it is expected that good discharge performance and high rate discharge performance in a low temperature environment of the nonaqueous electrolyte energy storage device can be obtained. According to the nonaqueous electrolyte energy storage device, even when the imide salt is used at a general concentration that is not such a high concentration, the oxidation/corrosion of aluminum in the charging and discharging when the positive electrode is 4.0 V (vs. Li/Li⁺) or more can be suppressed. Therefore, in the nonaqueous electrolyte energy storage device, it is not necessary to use the imide salt at a high concentration. Usually, when the imide salt is used at a high concentration, the viscosity of the nonaqueous electrolyte increases. On the other hand, in the nonaqueous electrolyte energy storage device, when the concentration of the imide salt in the nonaqueous electrolyte is a general concentration that is not a high concentration as shown in the above range, it is possible to suppress an increase in viscosity of the nonaqueous electrolyte, and therefore it is expected that good discharge performance and high rate discharge performance in a low temperature environment of the nonaqueous electrolyte energy storage device can be obtained.

The contents of the salt (b) in which the charge center element of the anion is boron and which has an oxalato group in the nonaqueous electrolyte and the difluorophosphate (c) are not particularly limited as long as the contents are within a range that realizes the molar ratio with the content of the imide salt (a) or the content of the imide salt with respect to the total content of all ionic compounds in the nonaqueous electrolyte, and the lower limit of the contents of these salts is, for example, preferably 0.001 mol ·dm⁻³, more preferably 0.005 mol ·dm⁻³, still more preferably 0.01 mol ·dm⁻³, and even more preferably 0.02 mol ·dm⁻³. When the contents of these salts are the above lower limit or more, the charge-discharge cycle performance of the nonaqueous electrolyte energy storage device can be enhanced. On the other hand, the upper limit of the content of each of these salts is preferably 0.2 mol ·dm⁻³, more preferably 0.15 mol ·dm⁻³, and still more preferably 0.1 mol ·dm⁻³. When the contents of these salts are the above upper limit or less, it is expected that good discharge performance and high rate discharge performance in a low temperature environment of the nonaqueous electrolyte energy storage device can be obtained.

### (Nonaqueous solvent)

As the nonaqueous electrolyte, a known nonaqueous solvent that is normally used as a nonaqueous solvent of a common nonaqueous electrolyte for an energy storage device can be used. Examples of the nonaqueous solvent include carbonates, carboxylic acid esters, phosphoric acid esters, sulfonic acid esters, ethers, amides, sulfones, lactones, and nitriles. One or two or more of the nonaqueous solvents can be used.

### (Chain nonaqueous solvent containing fluorine in molecule)

The nonaqueous electrolyte preferably further contains a chain nonaqueous solvent containing fluorine in the molecule among the above nonaqueous solvents. Examples of the chain nonaqueous solvent containing fluorine in the molecule include chain fluorinated carbonates, chain fluorinated carboxylic acid esters, chain fluorinated ethers, chain fluorinated phosphoric acid esters, and chain fluorinated sulfonic acid esters. One or two or more of the chain nonaqueous solvents containing fluorine in the molecule can be used. The chain nonaqueous solvent containing fluorine in the molecule preferably contains fluorine as a fluorinated hydrocarbon group. The number of carbon atoms in the fluorinated hydrocarbon group is not particularly limited, and may be 1 or more, or 2 or more. The upper limit is not particularly limited, and is, for example, preferably 8, more preferably 5, still more preferably 4, and even more preferably 3. The number of fluorine atoms contained in the molecule is not particularly limited, and may be 1 or more, but preferably 3 or more. The upper limit is not particularly limited, and, for example, a group such as a perfluoroalkyl group in which all hydrogen atoms of a hydrocarbon group are substituted with a fluorine atom may be used, and the upper limit is preferably 17 or less, more preferably 9 or less, still more preferably 7, and even more preferably 5. The carbon to which the fluorine atom is bonded is not particularly limited, and may be a carbon located at the terminal of the hydrocarbon group or a carbon other than a terminal carbon.

### (Chain fluorinated carbonate)

Examples of the chain fluorinated carbonate include fluoromethyl methyl carbonate, bis(fluoromethyl)carbonate, difluoromethyl methyl carbonate, 2,2-difluoroethyl methyl carbonate, ethyl-(2,2-difluoroethyl)carbonate, bis(2,2-difluoroethyl)carbonate, 2,2,2-trifluoroethyl methyl carbonate (TFEMC), ethyl-(2,2,2-trifluoroethyl)carbonate, bis(2,2,2-trifluoroethyl)carbonate (FDEC), bis(2,2,3,3-tetrafluoropropyl)carbonate, and bis(2,2,3,3,3-pentafluoropropyl)carbonate. One or two or more of the chain fluorinated carbonates can be used. The chain fluorinated carbonate is required to be electrochemically stable, have a low viscosity, and be not too low in solubility of an electrolyte salt. Therefore, it is preferable that the proportion of fluorine atoms contained in the molecule is not too large, and it is preferable that the molecular weight is not too large. From this viewpoint, 2,2,2-trifluoroethyl methyl carbonate (TFEMC), ethyl-(2,2,2-trifluoroethyl)carbonate, and bis(2,2,2-trifluoroethyl)carbonate (FDEC) are preferable, and 2,2,2-trifluoroethyl methyl carbonate (TFEMC) is more preferable.

### (Chain fluorinated carboxylic acid ester)

Examples of the chain fluorinated carboxylic acid ester include methyl 2,2-difluoroacetate, methyl 2,2,2-trifluoroacetate, ethyl 2,2,2-trifluoroacetate, methyl 3,3,3-trifluoropropionate (FMP), ethyl 3,3,3-trifluoropropionate, methyl 4,4,4-trifluorobutyrate, ethyl 4,4,4-trifluorobutyrate, trifluoromethyl acetate, 2,2-difluoroethyl acetate, 2,2,2-trifluoroethyl acetate (TFEA), trifluoromethyl propionate, 2,2,2-trifluoroethyl propionate, trifluoromethyl butyrate, 2,2-difluoroethyl butyrate, 2,2,2-trifluoroethyl butyrate (TFB), 2,2,2-trifluoroacetate 2,2,2-trifluoroethyl, 3,3,3-trifluoropropionate 2,2,2-trifluoroethyl, and 4,4,4-trifluorobutyrate 2,2,2-trifluoroethyl. One or two or more of the chain fluorinated carboxylic acid esters can be used. The chain fluorinated carboxylic acid ester is required to be electrochemically stable, have a low viscosity, and be not too low in solubility of an electrolyte salt. Therefore, it is preferable that the proportion of fluorine atoms contained in the molecule is not too large, and it is preferable that the molecular weight is not too large. From this viewpoint, ethyl 2,2,2-trifluoroacetate, methyl 3,3,3-trifluoropropionate (FMP), 2,2,2-trifluoroethyl acetate (TFEA), 2,2,2-trifluoroethyl propionate, and 2,2,2-trifluoroethyl butyrate (TFB) are preferable, methyl 3,3,3-trifluoropropionate (FMP), 2,2,2-trifluoroethyl acetate (TFEA), and 2,2,2-trifluoroethyl butyrate (TFB) are more preferable, and 2,2,2-trifluoroethyl butyrate (TFB) is still more preferable.

### (Chain fluorinated ether)

Examples of the chain fluorinated ether include 1,1,2,2-tetrafluoro-2,2,2-trifluoroethyl ether (TFEE), 1,1,2,2-tetrafluoroethyl-ethyl ether, 1,1,2,2-tetrafluoroethyl-2,2,3,3-tetrafluoropropyl ether (HFE), 1,1,2,2-tetrafluoroethyl-2,2,3,3,3-pentafluoropropyl ether, and 1,1,2,2-tetrafluoropropyl-1,1,2,3,3,3-hexafluoropropyl ether. One or two or more of the chain fluorinated ethers can be used. The chain fluorinated ether is required to be electrochemically stable, have a low viscosity, and be not too low in solubility of an electrolyte salt. Therefore, it is preferable that the proportion of fluorine atoms contained in the molecule is not too large, and it is preferable that the molecular weight is not too large. From this viewpoint, 1,1,2,2-tetrafluoro-2,2,2-trifluoroethyl ether (TFEE) and 1,1,2,2-tetrafluoroethyl-2,2,3,3-tetrafluoropropyl ether (HFE) are preferable, and 1,1,2,2-tetrafluoro-2,2,2-trifluoroethyl ether (TFEE) is more preferable.

The content of the chain nonaqueous solvent containing fluorine in the molecule is not particularly limited, and the lower limit of the content of the chain nonaqueous solvent containing fluorine in the molecule in the total nonaqueous solvent is preferably 10 vol%, more preferably 20 vol%, and still more preferably 30 vol%. On the other hand, the upper limit of the content of the chain nonaqueous solvent containing fluorine in the molecule is preferably 95 vol%, more preferably 90 vol%, and still more preferably 80 vol%. When the total content of the chain nonaqueous solvent containing fluorine in the molecule is the above lower limit or more as described above, it is possible to more effectively enhance the charge-discharge performance of the nonaqueous electrolyte energy storage device particularly in the charging and discharging when the operation potential of the positive electrode is 4.0 V (vs. Li/Li+) or more. On the other hand, when the content of the chain nonaqueous solvent containing fluorine in the molecule is the above upper limit or less, the viscosity of the nonaqueous electrolyte, conductivity of lithium ions, and the like can be optimized.

### (Other nonaqueous solvents)

In the nonaqueous electrolyte, as other nonaqueous solvents other than the chain nonaqueous solvent containing fluorine in the molecule, a known nonaqueous solvent that is normally used as a nonaqueous solvent of a common nonaqueous electrolyte for an energy storage device can be used. Examples of the nonaqueous solvent include carbonates, carboxylic acid esters, phosphoric acid esters, sulfonic acid esters, ethers, amides, sulfones, lactones, and nitriles. One or two or more of the nonaqueous solvents can be used.

### (Carbonate)

Among the above nonaqueous solvents, a carbonate is preferably used. The carbonate may be cyclic carbonate or chain carbonate. The carbonate may be a carbonate having no substituent, or may be a carbonate having a substituent. Examples of the substituent include halogen atoms such as a chlorine atom and a bromine atom, and a hydroxy group. One or two or more of the carbonates can be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, styrene carbonate, catechol carbonate, 1-phenylvinylene carbonate, 1,2-diphenylvinylene carbonate, fluoroethylene carbonate (FEC), 4,4-difluoroethylene carbonate (DFEC), 4,5-difluoroethylene carbonate, trifluoropropylene carbonate (4-(trifluoromethyl)-ethylene carbonate), 4-fluoro-4-methylethylene carbonate, 4-fluoro-5-methylethylene carbonate, and 4-(fluoromethyl)-ethylene carbonate. The cyclic carbonate is required to have a low viscosity and be not too low in solubility of an electrolyte salt. Therefore, a carbonate having a molecular weight that is not too large is preferable, and a carbonate having no substituent is also preferable. From this viewpoint, ethylene carbonate (EC) and propylene carbonate (PC) are preferable, and ethylene carbonate (EC) which is hardly oxidized and reduced is more preferable.

Examples of the chain carbonate include diethyl carbonate (DEC), dimethyl carbonate (DMC), ethyl methyl carbonate (EMC), diphenyl carbonate, di-n-propyl carbonate, diisopropyl carbonate, n-propyl isopropyl carbonate, di-n-butyl carbonate, diisobutyl carbonate, di-t-butyl carbonate, methyl-n-propyl carbonate, n-butyl methyl carbonate, isobutyl methyl carbonate, t-butyl methyl carbonate, ethyl-n-propyl carbonate, n-butylethyl carbonate, isobutylethyl carbonate, and t-butylethyl carbonate. The chain carbonate is required to have a low viscosity and be not too low in solubility of an electrolyte salt. Therefore, a carbonate having a molecular weight that is not too large is preferable, and a carbonate having no substituent is also preferable. From this viewpoint, diethyl carbonate (DEC), dimethyl carbonate (DMC), ethyl methyl carbonate (EMC), di-n-propyl carbonate, diisopropyl carbonate, n-propyl isopropyl carbonate, and methyl-n-propyl carbonate are preferable, and diethyl carbonate (DEC), dimethyl carbonate (DMC), and ethyl methyl carbonate (EMC) are more preferable.

The cyclic carbonate and the chain carbonate including the chain fluorinated carbonate can be used in combination, and one kind or two or more kinds thereof can be used. When the cyclic carbonate and the chain carbonate are used in combination, a volume ratio (cyclic carbonate: chain carbonate) of the cyclic carbonate and the chain carbonate including the chain fluorinated carbonate is not particularly limited, and can be, for example, 5 : 95 or more and 95 : 5 or less. The content of the carbonate is not particularly limited, and the lower limit of the content of the carbonate including the chain fluorinated carbonate in the total nonaqueous solvent is preferably 10 vol%, more preferably 20 vol%, and still more preferably 30 vol%. On the other hand, the upper limit of the content of the carbonate including the chain fluorinated carbonate may be 100 vol%, 95 vol%, 90 vol%, or 80 vol%. In addition, the lower limit of the content of the cyclic carbonate in the total nonaqueous solvent is preferably 5 vol%, more preferably 10 vol%, and still more preferably 20 vol%. On the other hand, the upper limit is preferably 80 vol%, more preferably 60 vol%, and still more preferably 50 vol%. When the content of the cyclic carbonate in the total nonaqueous solvent is the above lower limit or more, the charge-discharge performance of the nonaqueous electrolyte energy storage device can be more effectively enhanced. On the other hand, when the content of the cyclic carbonate is the above upper limit or less, the viscosity of the nonaqueous electrolyte, the conductivity of lithium ions, and the like can be optimized. In addition, the lower limit of the content of the chain carbonate including the chain fluorinated carbonate in the total nonaqueous solvent is preferably 10 vol%, more preferably 20 vol%, and still more preferably 30 vol%. On the other hand, the upper limit is preferably 95 vol%, more preferably 90 vol%, and still more preferably 80 vol%. When the content of the chain carbonate is the above lower limit or more, the viscosity of the nonaqueous electrolyte, the conductivity of lithium ions, and the like can be optimized. On the other hand, when the content of fluorinated cyclic carbonate is the above upper limit or less, the charge-discharge performance of the nonaqueous electrolyte energy storage device can be more effectively enhanced.

### (Additive)

The nonaqueous electrolyte may contain an additive as another component. Examples of the additive include cyclic carbonates having a carbon-carbon unsaturated bond, such as vinylene carbonate (VC), methylvinylene carbonate, ethylvinylene carbonate, vinylethylene carbonate (VEC), styrene carbonate, and catechol carbonate; cyclic halogenated carbonates such as fluoroethylene carbonate (FEC) and difluoroethylene carbonate (DFEC); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; acid anhydrides such as succinic anhydride, glutaric anhydride, maleic anhydride, citraconic anhydride, glutaconic anhydride, itaconic anhydride, and cyclohexanedicarboxylic anhydride; ethylene sulfite, propylene sulfite, dimethyl sulfite, propane sultone, propene sultone, butane sultone, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, perfluorooctane, tristrimethylsilyl borate, tristrimethylsilyl phosphate, tetrakistrimethylsilyl titanate, and lithium monofluorophosphate. These additives may be used singly, or two or more may be mixed and used. The upper limit of the content of the additive in the nonaqueous electrolyte may be preferably 5% by mass, more preferably 2% by mass, still more preferably 1% by mass, and even more preferably 0.1% by mass.

### <Nonaqueous electrolyte energy storage device>

The nonaqueous electrolyte energy storage device according to an embodiment of the present invention has a positive electrode, a negative electrode, and a nonaqueous electrolyte. Hereinafter, a nonaqueous electrolyte secondary battery will be described as an example of a nonaqueous electrolyte energy storage device. The positive electrode and the negative electrode usually form an electrode assembly alternately superposed by stacking or winding with a separator interposed therebetween. The electrode assembly is housed in a case, and the case is filled with the nonaqueous electrolyte. The nonaqueous electrolyte is interposed between the positive electrode and the negative electrode. As the case, a known metal case, a resin case or the like, which is usually used as a case of a nonaqueous electrolyte secondary battery, can be used.

### (Positive electrode)

The positive electrode has a positive substrate and a positive composite layer disposed directly or via an intermediate layer on the positive substrate.

The positive substrate has conductivity. As the material of the substrate, a metal such as aluminum, titanium, tantalum, or stainless steel, or an alloy thereof is used. Among these materials, aluminum and an aluminum alloy are preferable for the balance between conductivity level and cost. When the positive substrate is aluminum or an aluminum alloy, it is possible to more sufficiently enjoy the effect of the present invention of suppressing the decrease in charge-discharge performance of the nonaqueous electrolyte energy storage device, which is presumed to be mainly caused by oxidation/corrosion of aluminum, and improving the charge-discharge cycle performance. Exemplified as a formation form of the positive substrate are a foil and a deposited film, and a foil is preferred in terms of costs. That is, an aluminum foil is preferable as the positive substrate. Examples of aluminum and the aluminum alloy include A1085P and A3003P specified in JIS-H-4000 (2014).

The intermediate layer is a covering layer on the surface of the positive substrate, and reduces contact resistance between the positive substrate and the positive composite layer by including conductive particles such as carbon particles. The configuration of the intermediate layer is not particularly limited, and can be formed from, for example, a composition containing a resin binder and conductive particles. Having "conductivity" means having a volume resistivity of 10⁷ Ω ·cm or less that is measured in accordance with JIS-H-0505 (1975), and the term "non-conductivity" means that the volume resistivity is more than 10⁷ Ω ·cm.

The positive composite layer is a layer formed of a positive composite. The positive composite contains a positive active material, and further contains optional components such as a conductive agent, a binder, a thickener, a filler, and a dispersant as necessary.

Examples of the positive active material include a lithium transition metal composite oxide and a polyanion compound. Examples of the lithium transition metal composite oxide include composite oxides represented by LiₓMeO_{y} (Me represents at least one transition metal) (LiₓCoO₂, LiₓNiO₂, LiₓMnO₃, LiₓNi_{α}Co_{(1-α)}O₂, LiₓNi_{α}Co_{β}Al_{(1-α-β)}O₂, LiₓNi_{α}Mn_{β}Co_{(1-α-β)}O₂, Li₁₊ₓ(Ni_{α}Mn_{β}Co_{(1-α-β)})₁₋ₓO₂ and the like each having a layered α-NaFeO₂-type crystal structure, and LiₓMn₂O₄, LiₓNi_{α}Mn_{(2-α)}O₄ and the like each having a spinel-type crystal structure). Examples of the polyanion compounds include a polyanion compound represented by Li_{w}Meₓ(XO_{y})_{z} (Me represents at least one transition metal, and X represents, for example, P, Si, B, V or the like) (LiFePO₄, LiMnPO₄, LiNiPO₄, LiCoPO₄, Li₃V₂(PO₄)₃, Li₂MnSiO₄, Li₂CoPO₄F and the like). Elements or polyanions in these compounds may be partially substituted with other elements or anionic species. In the positive composite layer, one of these compounds may be used singly, or two or more of these compounds may be mixed and used.

The positive active material preferably contains a positive active material whose positive electrode potential at an end-of-charge voltage under normal usage of the nonaqueous electrolyte energy storage device can be nobler than 4.0 V (vs. Li/Li⁺). As such a positive active material, a lithium transition metal composite oxide is preferable. The nonaqueous electrolyte energy storage device has good charge-discharge cycle performance even for such a use that the positive electrode develops an operation potential of 4.0 V (vs. Li/Li⁺) or more. Therefore, by using the positive active material whose positive electrode operation potential can be 4.0 V (vs. Li/Li⁺) or more, a nonaqueous electrolyte energy storage device having increased energy density and improved charge-discharge cycle performance can be provided. Here, the term "under normal usage" means use of the nonaqueous electrolyte energy storage device while employing charge-discharge conditions recommended or specified in the nonaqueous electrolyte energy storage device. With respect to the charge conditions, when a charger for the nonaqueous electrolyte energy storage device is prepared, the case of using the nonaqueous electrolyte energy storage device by applying the charger is referred to as under normal usage.

The lower limit of the content ratio of the lithium transition metal composite oxide in the total positive active material is preferably 50% by mass, more preferably 90% by mass, and still more preferably 99% by mass. The positive active material may be substantially composed only of the lithium transition metal composite oxide. When the content ratio of the lithium transition metal composite oxide is increased as described above, the energy density can be further increased, while having good high rate discharge performance in a low temperature environment.

The positive active material more preferably contains a positive active material whose positive electrode operation potential at the end-of-charge voltage under normal usage of the nonaqueous electrolyte energy storage device can be 4.35 V (vs. Li/Li⁺) or more. The positive active material whose positive electrode operation potential at the end-of-charge voltage under normal usage can be 4.35 V (vs. Li/Li⁺) or more may be a positive active material capable of allowing reversible insertion and extraction of lithium ions at a potential of 4.35 V (vs. Li/Li⁺) or more. Examples of such a positive active material include Li₁₊ₓ (Ni_{α}Mn_{β}Co_{(1-α-β)})₁₋ₓO₂ (0<x<1, 0≤α<0.5, 0.5<β≤1, 0≤1-α-β<0.5) having a layered α-NaFeO₂-type crystal structure, LiNi_{0.5}Mn_{1.5}O₄ which is an example of LiₓNi_{α}Mn_{(2-α)}O₄ having a spinel-type crystal structure, LiNiPO₄ which is an example of a polyanion compound, LiCoPO₄, Li₂CoPO₄F, and Li₂MnSiO₄.

The content of the positive active material in the positive composite layer can be, for example, 80% by mass or more and 98% by mass or less, and is preferably 90% by mass or more.

The conductive agent is not particularly limited as long as it is a conductive material that does not adversely affect the energy storage device performance. Examples of such a conductive agent include carbon blacks such as natural or artificial graphite, furnace black, acetylene black, and ketjen black, metal, and conductive ceramic, and acetylene black is preferable. Examples of the shape of the conductive agent include a powdery shape and a fibrous shape.

Examples of the binder include polytetrafluoroethylene (PTFE), polyvinylidene fluoride (PVDF), a copolymer of vinylidene fluoride and hexafluoropropylene (PVDF-HFP), polyethylene, polypropylene, polyacrylonitrile, polyamide, polyimide, polyamideimide, polyacrylic acid, polymethyl methacrylate (PMMA), ethylene-propylene-diene rubber (EPDM), sulfonated EPDM, and styrene-butadiene rubber (SBR).

Examples of the thickener include polysaccharide polymers such as carboxymethylcellulose (CMC) and methylcellulose. When the thickener has a functional group reactive with lithium, it is preferable to deactivate the functional group by methylation or the like in advance.

The filler is not particularly limited as long as it is a filler that does not adversely affect the energy storage device performance. Examples of the main component of the filler include polyolefins such as polypropylene and polyethylene, silica, alumina, zeolite and glass.

The positive active material layer may further contain other optional components such as additives as necessary. Examples of the additive include an oxoacid of phosphorus. However, in the nonaqueous electrolyte energy storage device, a portion or all of the oxoacid of phosphorus may be modified. A positive composite paste obtained by mixing at least a positive active material and the oxoacid of phosphorus is applied onto a positive substrate surface and dried to form a film containing a phosphorus atom on the positive electrode, and thus to a positive electrode in which a peak attributed to P2p is present at a position of 135 eV or less in an X-ray photoelectron spectroscopic spectrum of the positive composite is obtained.

The oxoacid of phosphorus refers to a compound having a structure in which a hydroxy group (-OH) and an oxy group (=O) are bonded to a phosphorus atom. Examples of the oxoacid of phosphorus include phosphoric acid (H₃PO₄), phosphonic acid (H₃PO₃), phosphinic acid (H₃PO₂), pyrophosphoric acid (H₄P₂O₇), and polyphosphoric acid. Among these acids, phosphoric acid and phosphonic acid are preferable, and phosphonic acid is more preferable.

The lower limit of the content (addition amount) of the oxoacid of phosphorus in the positive composite paste is preferably 0.05 parts by mass, more preferably 0.1 parts by mass, and still more preferably 0.3 parts by mass, based on 100 parts by mass of the positive active material. On the other hand, the upper limit of the content is preferably 5 parts by mass, more preferably 3 parts by mass, and still more preferably 2 parts by mass. When the content of the oxoacid of phosphorus is within the above range, particularly the effect of improving the charge-discharge cycle performance of the nonaqueous electrolyte energy storage device can be efficiently obtained.

It is presumed that the phosphorus atom is present in a film formed on a positive composite surface. That is, it is presumed that the phosphorus atom derived from the oxoacid of phosphorus is present in the film formed on the positive composite surface, whereby the peak attributed to P2p is present at the position of 135 eV or less in the X-ray photoelectron spectroscopic spectrum of the positive composite. In the X-ray photoelectron spectroscopic spectrum of the positive composite, the upper limit of the position of the peak attributed to P2p is preferably 134 eV. On the other hand, the lower limit of the position of this peak may be 130 eV or 132 eV.

A sample (positive composite) used for measurement of the X-ray photoelectron spectroscopic spectrum is prepared by the following method. The nonaqueous electrolyte energy storage device is discharged with a current of 0.1 C until the voltage becomes an end-of-discharge voltage under normal usage, so that the energy storage device is brought to a completely discharged state. The energy storage device in the completely discharged state is disassembled to take out the positive electrode, and the positive electrode is sufficiently washed with dimethyl carbonate, and then dried under reduced pressure at room temperature. The dried positive electrode is cut into a predetermined size (for example, 2 × 2 cm), and the cut electrode is used as a sample in the measurement of the X-ray photoelectron spectroscopic spectrum. Operations from the disassembly of the nonaqueous electrolyte energy storage device to the preparation of the sample in the measurement of the X-ray photoelectron spectroscopic spectrum are performed in an argon atmosphere having a dew point of - 60°C or less, and the prepared sample is sealed in a transfer vessel, held in the argon atmosphere having a dew point of -60°C or less, and introduced into a sample chamber of an X-ray photoelectron spectroscopic spectrum measurement device. The device and the measurement conditions to be employed in the measurement of the X-ray photoelectron spectroscopic spectrum are as follows.
Device: "AXIS NOVA" manufactured by KRATOS ANALYTICAL
X-Ray source: monochromatized AlKα
Acceleration voltage: 15 kV
Area to be analyzed: 700 µm × 300 µm
Measurement range: P2p=145 to 128 eV, C1s=300 to 272 eV
Measurement interval: 0.1 eV
Measurement time: P2p=72.3 seconds/round, C1s=70.0 seconds/round
Frequency of integration: P2p=15 times, C1s=8 times

The position of a peak in the spectrum is a value determined in the following manner. Firstly, the position of a peak of C1s attributed to sp2 carbon is defined as 284.8 eV, and the binding energies of all of the obtained spectra are corrected. Next, a background is removed from the corrected spectrum by a straight line method, whereby a leveling processing is carried out. A binding energy at which the intensity of a peak attributed to P2p becomes highest in the spectra obtained after the leveling processing is defined as the position of a peak attributed to P2p.

### (Negative electrode)

The negative electrode has a negative substrate and a negative composite layer disposed directly or via an intermediate layer on the negative substrate. The intermediate layer may have the same configuration as the intermediate layer of the positive electrode.

The negative substrate has conductivity. Although the negative substrate may have the same configuration as the positive substrate, as the material of the negative substrate, metals such as copper, nickel, stainless steel, and nickel-plated steel, and aluminum or alloys thereof are used, and copper or a copper alloy is preferable. That is, a copper foil is preferable as the negative substrate. Examples of the copper foil include rolled copper foils and electrolytic copper foils.

The negative composite layer is formed from a negative composite containing a negative active material. The negative composite that forms the negative composite layer contains optional components such as a conductive agent, a binder, a thickener, a filler, and a dispersant as necessary. As regards the optional component such as a conducting agent, a binding agent, a thickener, a filler, or a dispersant, it is possible to use the same component as in the positive composite.

As the negative active material, a material capable of absorbing and releasing lithium ions and the like is normally used. Specific examples of the negative active material include metallic Li; metals or metalloids such as Si, Sn, and Sb; metal oxides or metalloid oxides such as an Si oxide, a Ti oxide, and an Sn oxide; a polyphosphoric acid compound; silicon carbide; and carbon materials such as graphite and non-graphitic carbon (easily graphitizable carbon or hardly graphitizable carbon). In the negative active material layer, one of these materials may be used singly, or two or more of these materials may be mixed and used.

The negative composite (negative composite layer) may also contain a typical nonmetal element such as B, N, P, F, Cl, Br, or I, a typical metal element such as Li, Na, Mg, Al, K, Ca, Zn, Ga, or Ge, or a transition metal element such as Sc, Ti, V, Cr, Mn, Fe, Co, Ni, Cu, Mo, Zr, Ta, Hf, Nb, or W.

The negative active material preferably contains a material having a low operation potential under normal usage of the nonaqueous electrolyte energy storage device. As such a negative active material, a carbon material such as graphite or non-graphitic carbon is preferable.

The term "graphite" refers to a carbon material in which an average lattice distance (d₀₀₂) of the (002) plane determined by an X-ray diffraction method before charging/discharging or in a discharged state is 0.33 nm or more and less than 0.34 nm. Examples of the graphite include natural graphite and artificial graphite. Artificial graphite is preferable from the viewpoint that a material having stable physical properties can be obtained.

The term "non-graphitic carbon" refers to a carbon material in which the average lattice distance (d₀₀₂) of the (002) plane determined by the X-ray diffraction method before charging/discharging or in the discharged state is 0.34 nm or more and 0.42 nm or less. A crystallite size Lc of the non-graphitic carbon is usually 0.80 to 2.0 nm. Examples of the non-graphitic carbon include hardly graphitizable carbon and easily graphitizable carbon. Examples of the non-graphitic carbon include a material derived from resin, a material derived from petroleum pitch, and a material derived from alcohol.

Here, the "discharged state" refers to a state where an open circuit voltage is 0.7 V or more in a unipolar battery using a negative electrode, containing a carbon material as a negative active material, as a working electrode and using metallic Li as a counter electrode. Since the potential of the metallic Li counter electrode in an open circuit state is substantially equal to an oxidation/reduction potential of Li, the open circuit voltage in the unipolar battery is substantially equal to the potential of the negative electrode containing the carbon material with respect to the oxidation/reduction potential of Li. That is, the fact that the open circuit voltage in the unipolar battery is 0.7 V or more means that lithium ions that can be occluded and released in association with charge and discharge are sufficiently released from the carbon material that is the negative active material.

The "hardly graphitizable carbon" refers to a carbon material in which the d₀₀₂ is 0.36 nm or more and 0.42 nm or less. The hardly graphitizable carbon usually has a property that it is difficult to form a graphite structure having a three-dimensional lamination regularity among non-graphitic carbon.

The "easily graphitizable carbon" refers to a carbon material in which the d₀₀₂ is 0.34 nm or more and less than 0.36 nm. The easily graphitizable carbon usually has a property that it is easy to form a graphite structure having a three-dimensional lamination regularity among non-graphitic carbon.

The content of the negative active material in the negative composite layer can be, for example, 80% by mass or more and 99% by mass or less, and is preferably 90% by mass or more and 98% by mass or less.

### (Separator)

As a material of the separator, for example, a woven fabric, a nonwoven fabric, a porous resin film or the like is used. Among them, a porous resin film is preferable from the viewpoint of strength, and a nonwoven fabric is preferable from the viewpoint of liquid retention property of the nonaqueous electrolyte. As a main component of the separator, a polyolefin such as polyethylene or polypropylene is preferable from the viewpoint of strength, and polyimide, aramid or the like is preferable from the viewpoint of resistance to oxidation and decomposition. These resins may be combined.

An inorganic insulating layer may be disposed between the separator and the electrode (normally the positive electrode). The inorganic insulating layer is a porous layer that is also called a heat-resistant layer or the like. It is also possible to use a separator with an inorganic insulating layer formed on one surface or both surfaces of a porous resin film. The inorganic insulating layer normally includes inorganic insulating particles and a binder, and may contain other components. As the inorganic insulating particles, Al₂O₃, SiO₂, aluminosilicate and the like are preferable.

### (Operation voltage of nonaqueous electrolyte energy storage device)

In the nonaqueous electrolyte energy storage device, the lower limit of a maximum reached potential of the positive electrode may be, for example, 4.0 V (vs. Li/Li⁺) or 4.2 V (vs. Li/Li⁺), may be 4.4 V (vs. Li/Li⁺), may be 4.5 V (vs. Li/Li⁺), may be 4.6 V (vs. Li/Li⁺), or may be 4.7 V (vs. Li/Li⁺). The upper limit of the maximum reached potential of the positive electrode may be, for example, 5.4 V (vs. Li/Li⁺) or 5.0 V (vs. Li/Li⁺). In the nonaqueous electrolyte energy storage device, usually, in the charging and discharging that the maximum reached potential of the positive electrode at which the oxidation/corrosion of aluminum is likely to be caused remarkably when the imide salt is used becomes 4.0 V (vs. Li/Li⁺) or more, the charge-discharge cycle performance of the nonaqueous electrolyte energy storage device is improved, and therefore, the positive electrode can be used at an operation potential of 4.0 V (vs. Li/Li⁺) or more. In this manner, when the maximum reached potential of the positive electrode is high, the energy density of the nonaqueous electrolyte energy storage device can be increased.

The maximum reached potential of the positive electrode is preferably a positive electrode potential at an end-of-charge voltage of the nonaqueous electrolyte energy storage device under normal usage. In general, in the case where the potential of the positive electrode becomes high frequently as the result of the repeated charge-discharge procedures, a discharge capacity is likely to decrease. Thus, when the maximum reached potential of the positive electrode becomes, for example, 4.4 V (vs. Li/Li⁺) or more frequently as the result of the repeated charge-discharge procedures, the effect of improving the charge-discharge cycle performance of the nonaqueous electrolyte energy storage device can be exerted more significantly.

### <Method of producing nonaqueous electrolyte energy storage device>

The nonaqueous electrolyte energy storage device is preferably produced by the following method. That is, the method of producing a nonaqueous electrolyte energy storage device according to an embodiment of the present invention is a method of producing a nonaqueous electrolyte energy storage device including injecting a nonaqueous electrolyte for an energy storage device containing the imide salt (a), the salt (b) in which the charge center element of the anion is boron and which has an oxalato group, and the difluorophosphate (c) into a case (nonaqueous electrolyte injection step). The nonaqueous electrolyte injection step can be carried out by a known method. Namely, a nonaqueous electrolyte is prepared so as to have a desired composition, and the prepared nonaqueous electrolyte may be injected into a case.

The producing method may include the following steps and the like in addition to the nonaqueous electrolyte injection step. That is, the production method can include, for example, a step of preparing a positive electrode, a step of preparing a negative electrode, a step of forming an electrode assembly in which the positive electrode and the negative electrode are alternately superposed by stacking or winding the positive electrode and the negative electrode with a separator interposed between the electrodes, and a step of housing the positive electrode and the negative electrode (electrode assembly) in a case. Usually, the electrode assembly is housed in the case, and then the nonaqueous electrolyte is injected into the case; however, the order may be reversed. A nonaqueous electrolyte energy storage device can be obtained by sealing an injection port after these steps.

### <Other Embodiments>

The present invention is not limited to the aforementioned embodiments, and, in addition to the aforementioned embodiments, can be carried out in various modes with alterations and/or improvements being made. For example, it is not necessary to provide an intermediate layer in the positive electrode or the negative electrode. In the positive electrode of the nonaqueous electrolyte energy storage device, the positive composite is not required to form a distinct layer. For example, the positive electrode may have a structure in which a positive composite is carried on a mesh-shaped positive substrate.

In the above-described embodiment, an embodiment in which the nonaqueous electrolyte energy storage device is a nonaqueous electrolyte secondary battery has been mainly described, but the nonaqueous electrolyte energy storage device may be one other than a nonaqueous electrolyte secondary battery. Examples of another nonaqueous electrolyte energy storage device include capacitors (electric double layer capacitors and lithium ion capacitors).

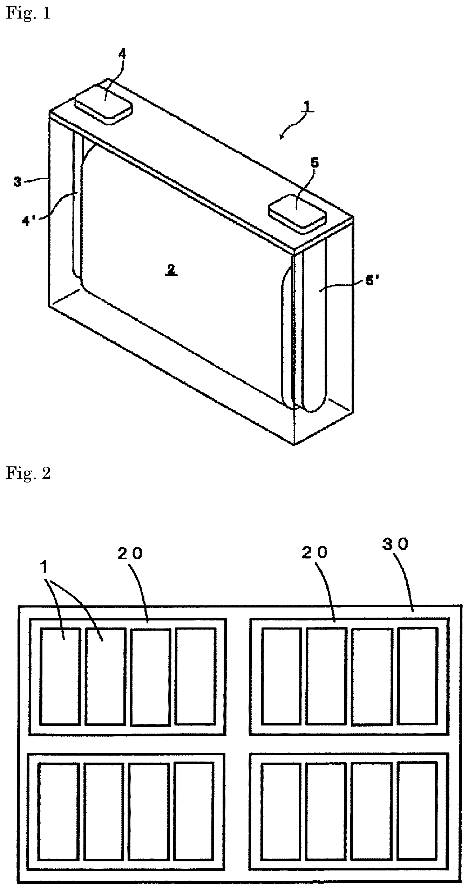

Fig. 1 is a schematic view of a rectangular nonaqueous electrolyte energy storage device 1 as an embodiment of the nonaqueous electrolyte energy storage device according to the present invention. Fig. 1 is a view showing an inside of a case in a perspective manner. In the nonaqueous electrolyte energy storage device 1 shown in Fig. 1, an electrode assembly 2 is housed in a case 3. The electrode assembly 2 is formed by winding a positive electrode, including a positive composite, and a negative electrode, including a negative composite, with a separator interposed between the electrodes. The positive electrode is electrically connected to a positive electrode terminal 4 through a positive electrode lead 4', and the negative electrode is electrically connected to a negative electrode terminal 5 through a negative electrode lead 5'. A nonaqueous electrolyte is injected in the case 3.

The shape of the nonaqueous electrolyte energy storage device according to the present invention is not particularly limited, and examples include cylindrical batteries, prismatic batteries (rectangular batteries), flat batteries, coin batteries, and button batteries. The present invention can also be implemented as an energy storage apparatus including a plurality of the nonaqueous electrolyte energy storage devices as described above. Fig. 2 shows an embodiment of an energy storage apparatus. In Fig. 2, an energy storage apparatus 30 includes a plurality of energy storage units 20. Each of the energy storage units 20 includes a plurality of the nonaqueous electrolyte energy storage devices 1. The energy storage apparatus 30 can be mounted as a power source for an automobile such as an electric vehicle (EV), a hybrid vehicle (HEV), a plug-in hybrid vehicle (PHEV), or the like.

### EXAMPLES

Hereinafter, the present invention will be described further in detail by way of examples, but the present invention is not limited to the following examples.

### (Production of positive electrode)

As a positive active material, a lithium transition metal composite oxide having an α-NaFeO₂ structure and represented by Li_{1+α}Me_{1-α}O₂ (Me represents a transition metal including Mn; 0.1<α<0.2; and the molar ratio of Mn to Me, i.e., Mn/Me, was 0.5<Mn/Me) was used. The positive active material, acetylene black (AB) that served as a conductive agent, polyvinylidene fluoride (PVDF) that served as a binder, and phosphonic acid (H₃PO₃) that served as an additive were mixed at a mass ratio of 93.5 : 4.5 : 1.5 : 0.5 in terms of solid contents using N-methyl pyrrolidone (NMP) as a dispersion medium to obtain a positive composite paste. The positive composite paste was applied onto one surface of an aluminum foil that served as a positive substrate, and was then dried to form a positive composite layer on the positive substrate. The positive composite paste was also applied onto the opposite side surface of the aluminum foil, and was then dried. The positive composite layer formed on the opposite side surface was detached after the drying. In this way, a positive electrode was obtained.

### (Production of negative electrode)

Graphite was used as the negative active material. Water was used as a dispersant, and the negative active material, styrene-butadiene rubber (SBR) that served as a binder, and carboxymethyl cellulose (CMC) that served as a thickener were mixed at a mass ratio of 97 : 2 : 1 in terms of solid contents to obtain a negative composite paste. The negative composite paste was applied onto one surface of a copper foil that served as a negative substrate, and was then dried to form a negative composite layer on the negative substrate. In this way, a negative electrode was obtained.

### [Example 1]

### (Preparation of nonaqueous electrolyte)

In a mixed solvent prepared by mixing ethylene carbonate (EC) with 2,2,2-trifluoroethyl butyrate (TFB) at a volume ratio of 10:90, lithium bis(fluorosulfonyl)imide (LiFSI) was dissolved at a concentration of 1.0 mol ·dm⁻³ as the imide salt (a), lithium difluoro oxalate borate (LiDFOB) was dissolved at a concentration of 0.05 mol ·dm⁻³ as the salt (b) in which the charge center element of the anion was boron and which had an oxalato group, and lithium difluorophosphate (LiDFP) was dissolved at a concentration of 0.05 mol ·dm⁻³ as the difluorophosphate salt (c) to prepare a nonaqueous electrolyte of Example 1.

### (Preparation of nonaqueous electrolyte energy storage device)

The positive electrode and the negative electrode were stacked with a separator that was a polyolefin-made microporous film interposed therebetween to prepare an electrode assembly. The electrode assembly was enclosed in a case made from a metal-resin composite film, then the nonaqueous electrolyte was injected into the inside of the case, and then an opening of the case was sealed by heat sealing to obtain a nonaqueous electrolyte energy storage device (laminated nonaqueous electrolyte secondary battery) of Example 1.

### [Examples 2 to 5 and Comparative Examples 1 to 5]

Nonaqueous electrolyte energy storage devices of Examples 2 to 5 and Comparative Examples 1 to 5 were obtained in the same manner as in Example 1, except that the types and concentrations of the electrolyte salts, the types of the solvents, and the volume-based mixing ratios shown in Tables 1 and 2 were employed.

The electrolyte salts and the solvents shown in the tables are the following compounds.
LiFSI: lithium bis(fluorosulfonyl)imide
LiDFOB: lithium difluoro oxalate borate
LiPO₂F₂: lithium difluorophosphate
EC: ethylene carbonate
TFB: 2,2,2-trifluoroethyl butyrate
TFEMC: 2,2,2-trifluoroethyl methyl carbonate

### [Battery evaluation]

### (Initial charge-discharge)

Each of the obtained nonaqueous electrolyte energy storage devices of Examples 1 to 5 and Comparative Examples 1 to 5 was subjected to initial charge-discharge under the following conditions. Each of the nonaqueous electrolyte energy storage devices was charged to 4.5 V at 25°C at a constant current of a charge current of 0.1 C, and was then charged at a constant voltage of 4.5 V. With respect to the charge termination conditions, the charging was carried out until the charge current reached 0.05 C. After the charging, a pause time of 10 minutes was provided, and then discharging was carried out to 2.0 V at 25°C at a constant current of 0.1 C. After the discharging, a pause time of 10 minutes was provided. The charging, discharging and pausing steps constituted one cycle, and the cycle was repeated 2 cycles.

### (X-ray photoelectron spectroscopy measurement)

Each of the nonaqueous electrolyte energy storage devices, which had been subjected to the initial charge-discharge procedure and was in a completely discharged state, was broken down in an argon atmosphere at a dew point of -60°C or less to remove the positive electrode, and the positive electrode was washed with dimethyl carbonate, and was then dried under reduced pressure at room temperature. The positive electrode thus obtained was enclosed in a transfer vessel in an argon atmosphere, and was then introduced into a sample chamber in an X-ray photoelectron spectroscopic spectrum measurement device, and then the surface of the positive composite in the positive electrode was subjected to an X-ray photoelectron spectroscopic measurement under the above-mentioned conditions. From the spectrum thus obtained, in the positive composites of each of the nonaqueous electrolyte energy storage devices of Examples 1 to 5 and Comparative Examples 1 to 5, the peak attributed to P2p could be confirmed between 133 eV and 134 eV by using phosphonic acid for the positive composite paste in each case. In the positive composites of Examples 2 to 5 and Comparative Examples 4 and 5 containing LiPF₆ as an electrolyte salt, the peak attributed to P2p derived from LiPF₆ could be also confirmed at 136 eV.

### (Charge-discharge cycle test)

Each of the nonaqueous electrolyte energy storage devices, which had been subjected to the initial charge-discharge procedure and was in the completely discharged state, was stored in a thermostat bath at 45°C for two hours, was then charged to 4.5 V at a constant current of a charge current of 0.5 C, and was then charged at a constant voltage of 4.5 V. With respect to the charge termination conditions, the charging was carried out until the charge current reached 0.05 C. The positive electrode potential at the time of termination of the charging (= the maximum reached potential of the positive electrode) was 4.6 V (vs. Li/Li⁺). After the charging, a pause time of 10 minutes was provided, and then discharging was carried out to 2.0 V at a constant current of 0.5 C. After the discharging, a pause time of 10 minutes was provided. The charging, discharging and pausing steps constituted one cycle, and the cycle was repeated 100 cycles. All of the charging, the discharging and the pausing were carried out in a thermostat bath at 45°C.

### (Capacity retention ratio)

With respect to each of the nonaqueous electrolyte energy storage devices, a ratio of the discharge capacity measured on 100th cycle to that measured on 1st cycle in the above-mentioned charge-discharge cycle test is defined as a "capacity retention ratio/%", and the results of the capacity retention ratios are shown in Tables 1 and 2.

**[Table 1]**

| | Imide salt (a) | Salt (b) | Salt (c) | Solvent (Volume-based mixing ratio) | Capacity retention ratio % |
|---|---|---|---|---|---|
| Example 1 | LiFSI 1.0 mol dm⁻³ | LiDFOB 0.05 mol dm⁻³ | LiPO₂F₂ 0.05 mol dm⁻³ | EC/TFB (10/90) | 91 |
| Comparative Example 1 | LiFSI 1.0 mol dm⁻³ | - | - | EC/TFB (10/90) | 75 |
| Comparative Example 2 | LiFSI 1.0 mol dm⁻³ | - | LiPO₂F₂ 0.1 mol dm⁻³ | EC/TFB (10/90) | 54 |
| Comparative Example 3 | LiFSI 1.0 mol dm⁻³ | LiDFOB 0.1 mol dm⁻³ | - | EC/TFB (10/90) | 52 |

**[Table 2]**

| | Imide salt (a) | Salt (b) | Salt (c) | Other salts | Solvent (Volume-based mixing ratio) | Capacity retention ratio % |
|---|---|---|---|---|---|---|
| Example 2 | LiFSI 0.3 mol dm⁻³ | LiDFOB 0.05 mol dm⁻³ | LiPO₂F₂ 0.05 mol dm⁻³ | LiPF₆ 0.7 mol dm⁻³ | EC/TFEMC (20/80) | 91 |
| Example 3 | LiFSI 0.5 mol dm⁻³ | LiDFOB 0.05 mol dm⁻³ | LiPO₂F₂ 0.05 mol dm⁻³ | LiPF₆ 0.5 mol dm⁻³ | EC/TFEMC (20/80) | 91 |
| Example 4 | LiFSI 0.7 mol dm⁻³ | LiDFOB 0.05 mol dm⁻³ | LiPO₂F₂ 0.05 mol dm⁻³ | LiPF₆ 0.3 mol dm⁻³ | EC/TFEMC (20/80) | 91 |
| Example 5 | LiFSI 0.9 mol dm⁻³ | LiDFOB 0.05 mol dm⁻³ | LiPO₂F₂ 0.05 mol dm⁻³ | LiPF₆ 0.1 mol dm⁻³ | EC/TFEMC (20/80) | 92 |
| Comparative Example 4 | - | - | - | LiPF₆ 1.0 mol dm⁻³ | EC/TFEMC (20/80) | 88 |
| Comparative Example 5 | - | LiDFOB 0.05 mol dm⁻³ | LiPO₂F₂ 0.05 mol dm⁻³ | LiPF₆ 1.0 mol dm⁻³ | EC/TFEMC (20/80) | 90 |

As apparent from the comparison between Example 1 and Comparative Example 1 in Table 1, it is found that, in a nonaqueous electrolyte energy storage device in which the nonaqueous electrolyte contains the imide salt (a), the salt (b) in which the charge center element of the anion is boron and which has an oxalato group, and the difluorophosphate (c), the capacity retention ratio is high, and good charge-discharge cycle performance is obtained as compared with the case of using the nonaqueous electrolyte which contains the imide salt (a) and does not contain the salt (b) in which the charge center element of the anion is boron and which has an oxalato group and the difluorophosphate (c).

As apparent from the comparison of Comparative Examples 1 to 3, it is found that, when the nonaqueous electrolyte contains the imide salt (a) and independently contains each of the salt (b) in which the charge center element of the anion is boron and which has an oxalato group or the difluorophosphate (c), in the nonaqueous electrolyte energy storage device using these nonaqueous electrolytes, the capacity retention ratio is rather low, and sufficiently good charge-discharge cycle performance cannot be obtained as compared with the case where none of these salts is contained. That is, it can be said that when the nonaqueous electrolyte containing the imide salt (a) contains both the salt (b) in which the charge center element of the anion is boron and which has an oxalato group and the difluorophosphate (c), a remarkable effect of improving the charge-discharge cycle performance is produced for the first time.

On the other hand, as apparent from the comparison between Comparative Example 4 and Comparative Example 5 in Table 2, when the nonaqueous electrolyte does not contain the imide salt (a), even if the nonaqueous electrolyte contains both the salt (b) in which the charge center element of the anion is boron and which has an oxalato group and the difluorophosphate (c), although the charge-discharge cycle performance is improved, the effect is slight. As described above, the effect that the nonaqueous electrolyte energy storage device using the nonaqueous electrolyte containing the imide salt (a), the salt (b) in which the charge center element of the anion is boron and which has an oxalato group, and the difluorophosphate (c) has good charge-discharge cycle performance can be said to be a specific effect that is produced for the first time when these are combined and cannot be predicted at all from the conventional knowledge.

In addition, as apparent from the comparison between Examples 2 to 5 and Comparative Example 4, when the nonaqueous electrolyte containing the imide salt (a), the salt (b) in which the charge center element of the anion is boron and which has an oxalato group, and the difluorophosphate (c) further contains LiPF₆ as the electrolyte salt, the charge-discharge cycle performance is improved as compared with the case of containing only LiPF₆.

Here, in Example 2, the content of the imide salt (a) is 3 in terms of molar ratio with respect to the total content of the salt (b) in which the charge center element of the anion is boron and which has an oxalato group and the difluorophosphate (c). In other words, a molar amount A of the imide salt (a) contained in a 1 dm³ nonaqueous electrolyte is 0.3 mol, a molar amount B of the salt (b) in which the charge center element of the anion is boron and which has an oxalato group is 0.05 mol, and a molar amount C of the difluorophosphate (c) is 0.05 mol, so that A/(B + C) = 0.3/(0.05 + 0.05) = 3. The content of the imide salt (a) is 27 mol% with respect to the total content of all ionic compounds. That is, since the contents of all ionic compounds are 0.3 + 0.05 + 0.05 = 1.1 mol ·dm⁻³, (0.3/1.1) × 100 = 27. As described above, it is found that, when the content of the imide salt (a) is 3 or more in terms of molar ratio with respect to the total content of the salt (b) in which the charge center element of the anion is boron and which has an oxalato group and the difluorophosphate (c), or 25 mol% or more with respect to the total content of all ionic compounds, the effect of the present invention that the charge-discharge cycle performance of the nonaqueous electrolyte energy storage device is improved is obtained.

As shown in Example 1 and Example 2, the effect of the present invention is exerted regardless of the composition of the nonaqueous solvent; however, it can be said that the effect is effectively exerted when the nonaqueous electrolyte for an energy storage device contains a chain nonaqueous solvent containing fluorine in the molecule, such as a chain carboxylic acid ester or a chain fluorinated carbonate.

### INDUSTRIAL APPLICABILITY

The present invention can be applied to nonaqueous electrolyte energy storage devices and the like used for electronic devices such as personal computers and communication terminals, and as a power source for automobiles such as electric vehicles (EV), hybrid vehicles (HEV), and plug-in hybrid vehicles (PHEV).

### DESCRIPTION OF REFERENCE SIGNS

1: Nonaqueous electrolyte energy storage device
2: Electrode assembly
3: Case
4: Positive electrode terminal
4': Positive electrode lead
5: Negative electrode terminal
5': Negative electrode lead
20: Energy storage unit
30: Energy storage apparatus

## Claims

1. A nonaqueous electrolyte for an energy storage device comprising:
an imide salt (a);
a salt (b) in which a charge center element of an anion is boron and which has an oxalato group; and
a difluorophosphate (c),
wherein a content of the imide salt (a) is 3 or more in terms of molar ratio with respect to a total content of the salt (b) in which the charge center element of the anion is boron and which has the oxalato group and the difluorophosphate (c), or a content of the imide salt (a) is 25 mol% or more with respect to a total content of all ionic compounds.

2. The nonaqueous electrolyte for an energy storage device according to claim 1, wherein the imide salt (a) is LiN(SO₂F)₂, LᵢN(CF₃SO₂)₂, or LiN(C₂F₃SO₂)₂.

3. The nonaqueous electrolyte for an energy storage device according to claim 2, wherein the imide salt (a) is LiN(SO₂F)₂.

4. The nonaqueous electrolyte for an energy storage device according to any one of claims 1 to 3, wherein the salt (b) in which the charge center element of the anion is boron and which has the oxalato group is lithium bisoxalate borate or lithium difluoro oxalate borate.

5. The nonaqueous electrolyte for an energy storage device according to any one of claims 1 to 4, wherein the difluorophosphate (c) is lithium difluorophosphate or lithium difluorobisoxalate phosphate.

6. The nonaqueous electrolyte for an energy storage device according to any one of claims 1 to 5, comprising a chain nonaqueous solvent containing fluorine in a molecule.

7. A nonaqueous electrolyte energy storage device comprising the nonaqueous electrolyte for an energy storage device according to any one of claims 1 to 6.

8. The nonaqueous electrolyte energy storage device according to claim 7, having a positive electrode, a negative electrode and a nonaqueous electrolyte, wherein said positive electrode has a positive substrate and a positive composite layer disposed directly or via an intermediate layer on the positive substrate, and wherein said positive composite layer contains a positive active material whose positive electrode potential at an end-of-charge voltage of the nonaqueous electrolyte energy storage device under normal usage is 4.0 V (vs. Li/Li⁺) or more, and wherein said normal usage is use of the nonaqueous electrolyte energy storage device while employing charge-discharge conditions recommended or specified in the nonaqueous electrolyte energy storage device.

9. A method of producing a nonaqueous electrolyte energy storage device using the nonaqueous electrolyte for an energy storage device according to any one of claims 1 to 6.

## Patentansprüche

1. Nichtwässriger Elektrolyt für eine Energiespeichervorrichtung, umfassend:
ein Imidsalz (a);
ein Salz (b), bei dem ein Ladungszentrum-Element eines Anions Bor ist und das eine Oxalatogruppe aufweist; und
ein Difluorphosphat (c),
wobei ein Anteil des Imidsalzes (a) 3 oder mehr in Bezug auf ein Molverhältnis bezüglich eines Gesamtanteils des Salzes (b), bei dem das Ladungszentrum-Element des Anions Bor ist und das die Oxalatogruppe aufweist, und des Difluorphosphats (c) beträgt, oder ein Anteil des Imidsalzes (a) 25 Mol-% oder mehr bezüglich eines Gesamtanteils aller Ionenverbindungen beträgt.

2. Nichtwässriger Elektrolyt für eine Energiespeichervorrichtung nach Anspruch 1, wobei das Imidsalz (a) LiN(SO₂F)₂, LiN(CF₃SO₂)₂ oder LiN(C₂F_{S}SO₂)₂ ist.

3. Nichtwässriger Elektrolyt für eine Energiespeichervorrichtung nach Anspruch 2, wobei das Imidsalz (a) LiN(SO₂F)₂ ist.

4. Nichtwässriger Elektrolyt für eine Energiespeichervorrichtung nach einem der Ansprüche 1 bis 3, wobei das Salz (b), bei dem das Ladungszentrum-Element des Anions Bor ist und das die Oxalatogruppe aufweist, Lithiumbisoxalatborat oder Lithiumdifluoroxalatborat ist.

5. Nichtwässriger Elektrolyt für eine Energiespeichervorrichtung nach einem der Ansprüche 1 bis 4, wobei das Difluorphosphat (c) Lithiumdifluorphosphat oder Lithiumdifluorbisoxalatphosphat ist.

6. Nichtwässriger Elektrolyt für eine Energiespeichervorrichtung nach einem der Ansprüche 1 bis 5, umfassend ein nichtwässriges Kettenlösungsmittel, das Fluor im Molekül enthält.

7. Energiespeichervorrichtung mit nichtwässrigem Elektrolyt, umfassend den nichtwässrigen Elektrolyt für eine Energiespeichervorrichtung nach einem der Ansprüche 1 bis 6.

8. Energiespeichervorrichtung mit nichtwässrigem Elektrolyt nach Anspruch 7, mit einer positiven Elektrode, einer negativen Elektrode und einem nichtwässrigen Elektrolyt, wobei die positive Elektrode ein positives Substrat und eine positive Verbundschicht, die unmittelbar oder über eine Zwischenschicht auf dem positiven Substrat angeordnet ist, aufweist, und wobei die positive Verbundschicht ein positives Aktivmaterial enthält, dessen Potenzial der positiven Elektrode bei einer Ladeschlussspannung der Energiespeichervorrichtung mit nichtwässrigem Elektrolyt unter normaler Verwendung 4,0 V (gegen Li/Li⁺) oder mehr beträgt, und wobei die normale Verwendung die Verwendung der Energiespeichervorrichtung mit nichtwässrigem Elektrolyt unter Anwendung der bei der Energiespeichervorrichtung mit nichtwässrigem Elektrolyt empfohlenen oder vorgegebenen Lade-Entlade-Bedingungen ist.

9. Verfahren zur Herstellung einer Energiespeichervorrichtung mit nichtwässrigem Elektrolyt unter Verwendung des nichtwässrigen Elektrolyts für eine Energiespeichervorrichtung nach einem der Ansprüche 1 bis 6.

## Revendications

1. Electrolyte non aqueux pour un dispositif de stockage d'énergie comprenant :
un sel d'imide (a) ;
un sel (b) dans lequel un élément de centre de charge d'un anion est le bore et qui a un groupe oxalato ; et
un difluorophosphate (c),
dans lequel une teneur du sel d'imide (a) est de 3 ou plus en termes de rapport molaire par rapport à une teneur totale du sel (b) dans lequel l'élément de centre de charge de l'anion est le bore et qui a le groupe oxalato et du difluorophosphate (c), ou une teneur du sel d'imide (a) est de 25 % en moles ou plus par rapport à une teneur totale de tous les composés ioniques.

2. Electrolyte non aqueux pour dispositif de stockage d'énergie selon la revendication 1, dans lequel le sel d'imide (a) est LiN(SO₂F)₂, LiN(CF₃SO₂)₂ ou LiN(C₂F₅SO₂)₂.

3. Electrolyte non aqueux pour dispositif de stockage d'énergie selon la revendication 2, dans lequel le sel d'imide (a) est LiN(SO₂F)₂.

4. Electrolyte non aqueux pour dispositif de stockage d'énergie selon l'une quelconque des revendications 1 à 3, dans lequel le sel (b) dans lequel l'élément de centre de charge de l'anion est le bore et qui a le groupe oxalato est le borate de bisoxalate de lithium ou le borate de difluoro oxalate de lithium.

5. Electrolyte non aqueux pour dispositif de stockage d'énergie selon l'une quelconque des revendications 1 à 4, dans lequel le difluorophosphate (c) est le difluorophosphate de lithium ou le phosphate de difluorobisoxalate de lithium.

6. Electrolyte non aqueux pour dispositif de stockage d'énergie selon l'une quelconque des revendications 1 à 5, comprenant un solvant non aqueux à chaîne contenant du fluor dans une molécule.

7. Dispositif de stockage d'énergie à électrolyte non aqueux comprenant l'électrolyte non aqueux pour dispositif de stockage d'énergie selon l'une quelconque des revendications 1 à 6.

8. Dispositif de stockage d'énergie à électrolyte non aqueux selon la revendication 7, ayant une électrode positive, une électrode négative et un électrolyte non aqueux, dans lequel ladite électrode positive a un substrat positif et une couche composite positive disposée directement ou via une couche intermédiaire sur le substrat positif et ladite couche composite positive contenant un matériau actif positif dont le potentiel d'électrode positive à une tension d'extrémité de charge du dispositif de stockage d'énergie à électrolyte non aqueux sous usage normal est de 4,0 V (vs Li/Li⁺) ou plus et ledit usage normal étant l'utilisation du dispositif de stockage d'énergie à électrode non aqueux tout en employant des conditions de charge-décharge recommandées ou spécifiées dans le dispositif de stockage à électrolyte non aqueux.

9. Procédé de production d'un dispositif de stockage d'énergie à électrolyte non aqueux en utilisant l'électrolyte non aqueux pour dispositif de stockage d'énergie selon l'une quelconque des revendications 1 à 6.
